# FASCICULE DE BREVET EUROPEEN

(11) **EP 2 150 453 B1**
(45) Date de publication et mention de la délivrance du brevet: **01.12.2010**
(21) Numéro de dépôt: 08805698.1
(22) Date de dépôt: 23.04.2008
(51) Int. Cl.: B62D 21/15, B60R 19/12

(54) **TRAVERSE AVANT DOUBLE POUR VEHICULE AUTOMOBILE**
DOPPELFRONTQUERTRÄGER FÜR EIN MOTORFAHRZEUG
DOUBLE FRONT CROSSMEMBER FOR A MOTOR VEHICLE

(30) Priorité: 31.05.2007 FR 0703867
(43) Date de publication de la demande: 10.02.2010
(73) Titulaire: Renault S.A.S., 92100 Boulogne-Billancourt (FR)
(72) Inventeur: MAUDUIT, Thomas, F-78117 Chateaufort (FR); VIVERO, François, F-78150 Le Chesnay (FR)
(74) Mandataire: Religieux, Vincent
(86) Numéro de dépôt international: PCT/FR2008/050744
(87) Numéro de publication internationale: WO 2008/152257

(56) Documents cités:
- EP-A1- 1 256 510
- US-A- 6 062 634

## Description

La présente invention concerne une traverse avant pour véhicule automobile, destinée à être fixée à l'extrémité antérieure des longerons latéraux du brancard.

On connaît, par exemple par le document FR 2 824 523, une telle traverse avant fixée par l'intermédiaire d'une structure déformable sous le choc, couramment appelée « crash box », à l'extrémité antérieure du longeron. La traverse avant est elle-même destinée à absorber et transmettre les différents types de choc qui peuvent intervenir sur le véhicule. Ses caractéristiques structurelles sont adaptées au cahier des charges.

Dans certains cas, il est souhaitable de dégager un espace à l'avant du radiateur du moteur pour permettre une meilleure circulation de l'air de refroidissement. La traverse avant peut alors être réalisée sous forme d'un élément embouti formant cadre et composé de multiple pièces ou bien d'une traverse double, comme connue par la figure 7 du brevet FR 2 859 157 de la Demanderesse, qu'on a repris sur la figure 3 annexée. Les extrémités antérieures des longerons 1 sont reliées par les deux traverses 10 cintrées vers l'avant, elles-mêmes reliées transversalement par un certain nombre de pièces intermédiaires 4, 5. Les extrémités des traverses sont fixées aux longerons par l'intermédiaire de structure de liaison 3 déformables. Comme on le voit, les deux traverses sont situées à l'avant du radiateur 2, et ménagent entre elles un espace permettant la circulation de l'air.

Le document US 6 062 634 montre une structure avant constituée de traverses non identiques.

Le but de la présente invention est de proposer une structure avant à traverse double qui soit plus simple et plus économique à réaliser.

L'invention atteint son but grâce à une structure avant d'absorption de choc, comportant deux barres avant identiques, chaque barre comportant une section centrale entourée de deux sections intermédiaires et de deux sections d'extrémité, les barres étant en partie parallèles et destinées à être reliées par leurs sections d'extrémité aux extrémités avant antérieures de deux longerons d'un véhicule automobile, caractérisée en ce que les deux barres sont cintrées dans leurs sections intermédiaires au voisinage de leurs sections d'extrémité de façon qu'elles puissent être assemblées l'une à l'autre au niveau desdites sections d'extrémité tout en ménageant entre elles un espace libre central. On obtient ainsi une structure unitaire de traverse double où les sections centrales des barres sont parallèles.

Il y a de préférence sur chaque barre au moins une zone de contact au moins linéaire avec l'autre barre, pour permettre de les solidariser facilement, par exemple avec un cordon de soudure.

Selon une caractéristique de l'invention, les axes centraux des sections d'extrémités et de la section centrale sont dans des plans parallèles mais forment un angle entre eux. Du fait qu'ils sont dans des plans parallèles, l'assemblage des deux barres est plus facile et solides au niveau de leurs extrémités. Du fait de l'angle formé, la section centrale est décalée en avant de l'extrémité antérieure des longerons et lors d'un choc, permet une déformation avec absorption d'énergie.

Les sections d'extrémités comportent de préférence une aile de fixation à l'extrémité antérieure d'un longeron et celle-ci peut comporter une patte de fixation raccordée à la section d'extrémité par un triangle de rattrapage d'angle.

De préférence, les barres sont des profilés à section rectangulaire ou carrée, les sections d'extrémités des deux barres étant au contact le long d'une face du profil dans la zone de la section d'extrémité, ce qui assure un bon contact des deux barres et permet une solidarisation facile et efficace par soudure.

De façon préférée, les barres des profilés sont en métal extrudé et tout particulièrement en aluminium, ce qui assure à la fois la légèreté de la structure et de bonnes possibilités de déformation et d'absorption de choc.

L'invention permet ainsi d'obtenir une structure avant amortisseuse de choc qui facilite l'écoulement de l'air pour refroidir le radiateur tout en conservant un bon fonctionnement en cas de choc à petite et grande vitesse. La structure est légère mais contribue par sa rigidité à la raideur dynamique du bloc avant (rigidité transversale). Elle permet de se passer de « crash box », ceux-ci étant en quelque sorte intégrés directement dans le concept de la traverse double.

D'autres caractéristiques et avantages de l'invention ressortiront de la description suivante d'un exemple de réalisation. Il sera fait référence aux dessins annexés sur lesquels :
- les figures 1 et 2 sont des vues en perspective avant et arrière de la traverse double conforme à l'invention ;
- la figure 3 représente en perspective une structure avant connue de l'art antérieur à deux traverses.

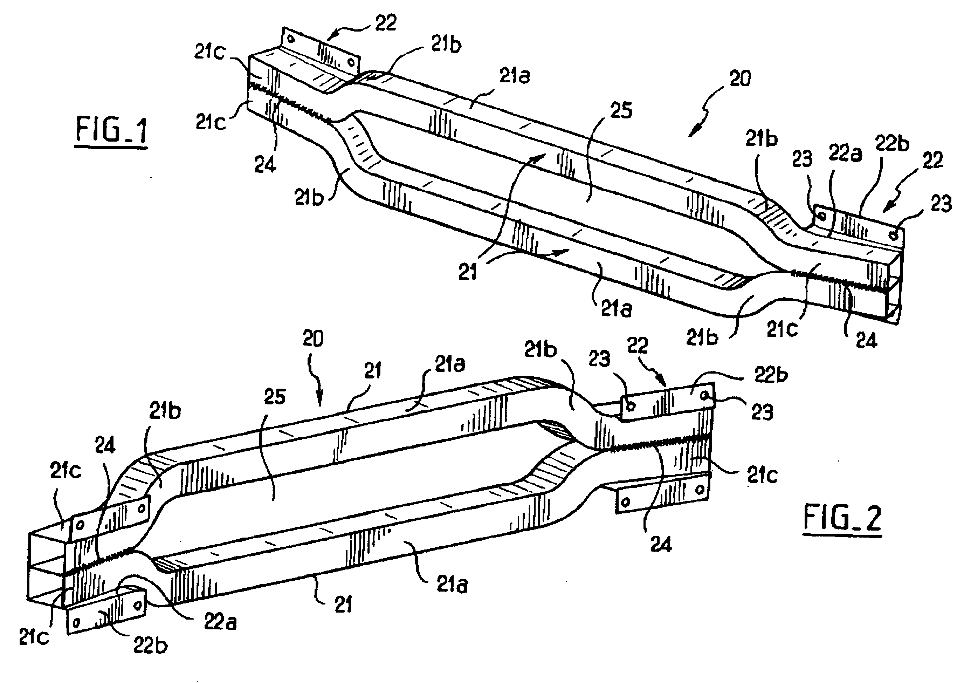

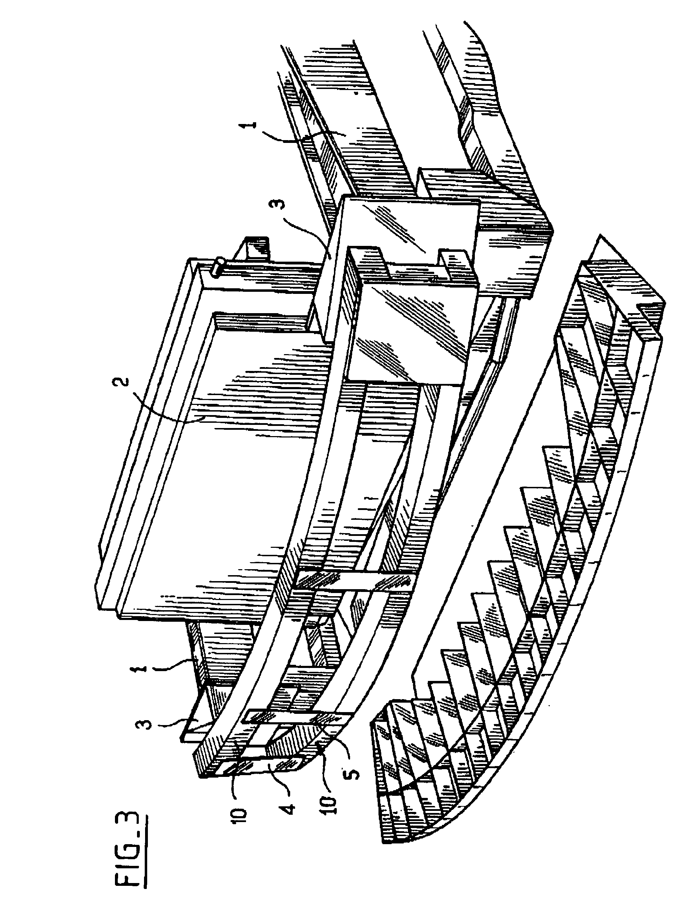

La traverse avant double 20 de l'invention est constituée de deux barres identiques 21 en aluminium extrudé, à section carrée ou rectangulaire, qui présentent un double cintrage. Chaque barre 21 est formée d'une section centrale 21a, entourée de deux courtes sections intermédiaires 21b et de deux sections d'extrémité 21c. La section centrale 21a de la barre 21 est sensiblement droite (elle pourrait éventuellement être arquée vers l'avant et/ou en direction verticale). Les sections d'extrémité 21 c sont droites et comprennent, venues par extrusion simultanée avec le reste du profil, des ailes de fixation 22 à l'extrémité antérieure des longerons 1 (ceux-ci ne sont pas représentés sur la figure 1 mais sont identiques à ceux de l'art antérieur représenté par exemple en figure 3). Chaque aile 22 comporte une patte de fixation 22b munie de trous 23, les pattes 22b étant destinées à être dans un même plan transversal orthogonal aux longerons, et un triangle 22a destiné à rattraper l'angle horizontal que fait l'extrémité de barre 21c avec un plan transversal vertical (Naturellement, ce triangle de rattrapage angulaire n'est pas nécessaire si on choisit une configuration de barre différente, par exemple dans laquelle les parties 21c sont décalées en gradin mais droites). Les barres 21 qui sont droites au sortir de l'extrudeuse sont doublement cintrées au niveaux de leurs sections intermédiaires 21b pour que, si l'on considère la partie centrale horizontale 21 a de la barre supérieure 21, les parties d'extrémités 21c soient décalées vers le bas et vers l'arrière par rapport à ladite partie centrale 21a; les axes des parties d'extrémité 21c sont dans un plan horizontal parallèle au plan horizontal contenant l'axe central de la partie centrale 21a. mais ils forment un angle avec le plan transversal vertical qui contient l'axe central de la partie centrale 21a.

Les deux barres 21 sont strictement identiques et sont assemblées en position inversée l'une de l'autre, en étant en contact l'une avec l'autre au niveau de leurs sections d'extrémité 21c dont les faces planes en regard sont solidarisées sur leurs deux bords latéraux par un cordon de soudure 24 ou par un autre moyen de solidarisation. Les deux barres 21 ménagent donc entre elle un espace 25 laissant passer l'air devant le radiateur 2.

Les deux barres assemblées 21 forment donc une structure unitaire double 20 qui est reliée directement à l'extrémité antérieure des longerons 1, sans nécessiter de « crash box » spécifique dans la mesure où c'est l'ensemble de la structure double qui sert ici à dissiper l'énergie des chocs.

L'importance du cintrage vers l'arrière des extrémités de barre est déterminée par la quantité d'énergie qui doit être reprise par la structure avant d'après le cahier des charges.

La solution de l'invention permet d'avoir une bonne rigidité transversale. On peut faire varier le premier mode de flexion de la traverse pour le caler aux fréquences souhaitées en jouant sur la forme et les épaisseurs des pattes de fixation au longeron.

La résiduelle incompressible après choc est minimisée, ce qui favorise la compacité du bloc avant.

## Revendications

1. Structure avant (20) d'absorption de choc, comportant deux barres avant (21) identiques, chaque barre (21) comportant une section centrale (21a) entourée de deux sections intermédiaires (21b) et de deux sections d'extrémité (21c), les barres (21) étant en partie parallèles et destinées à être reliées par leurs sections d'extrémité (21c) aux extrémités avant antérieures de deux longerons d'un véhicule automobile, **caractérisée en ce que** les deux barres (21) sont cintrées dans leurs sections intermédiaires (21b) au voisinage de leurs sections d'extrémité (21c) de façon qu'elles puissent être assemblées l'une à l'autre au niveau desdites sections d'extrémité (21c) tout en ménageant entre elles un espace libre central (25).

2. Structure selon la revendication 1, **caractérisée par**, sur chaque barre (21), au moins une zone de contact au moins linéaire avec l'autre barre (21).

3. Structure selon l'une quelconque des revendications 1 ou 2, **caractérisée en ce que** les axes centraux des sections d'extrémités (21c) et de la section centrale (21a) sont dans des plans parallèles mais forment un angle entre eux.

4. Structure selon l'une quelconque des revendications 1 à 3, **caractérisée en ce que** les sections d'extrémités (21c) comportent une aile de fixation (22) à l'extrémité antérieure d'un longeron.

5. Structure selon la revendication 4, **caractérisée en ce que** l'aile de fixation (22) à l'extrémité antérieure d'un longeron comporte une patte de fixation (22b) raccordée à la section d'extrémité par un triangle (22a) de rattrapage d'angle.

6. Structure selon l'une quelconque des revendications 1 à 5, **caractérisée en ce que** les barres (21) sont des profilés à section rectangulaire ou carrée, les sections d'extrémités (21c) des deux barres étant au contact le long d'une face du profil dans la zone de la section d'extrémité (21c).

7. Structure selon l'une quelconque des revendications 1 à 6, **caractérisée en ce que** les barres (21) sont des profilés en métal extrudé.

8. Structure selon la revendication 7, **caractérisée en ce que** les barres (21) sont des profilés en aluminium extrudé.

## Claims

1. Impact-absorbing front structure (20) comprising two identical front bars (21), each bar (21) comprising a central section (21a) flanked by two intermediate sections (21b) and two end sections (21c), the bars (21) being partially parallel and intended to be connected by their end sections (21c) to the anterior front ends of two chassis frame side rails of a motor vehicle, **characterized in that** the two bars (21) are curved in their intermediate sections (21b) in the vicinity of their end sections (21c) so that they can be assembled with one another at the said end sections (21c) leaving an empty central space (25) between them.

2. Structure according to Claim 1, **characterized by**, on each bar (21), at least one region of at least linear contact with the other bar (21).

3. Structure according to either one of Claims 1 and 2, **characterized in that** the central axes of the end sections (21c) and of the central section (21a) are in planes which are parallel but at an angle to one another.

4. Structure according to any one of Claims 1 to 3, **characterized in that** the end sections (21c) have a flange (22) for attaching to the anterior end of a chassis frame side rail.

5. Structure according to Claim 4, **characterized in that** the flange (22) for attaching to the anterior end of a chassis frame side rail comprises a fixing lug (22b) attached to the end section by a triangular angle infill piece (22a) .

6. Structure according to any one of Claims 1 to 5, **characterized in that** the bars (21) are profiles of rectangular or square cross section, the end sections (21c) of the two bars being in contact along one face of the profile in the region at the end section (21c).

7. Structure according to any one of Claims 1 to 6, **characterized in that** the bars (21) are extruded metal profiles.

8. Structure according to Claim 7, **characterized in that** the bars (21) are extruded aluminium profiles.

## Patentansprüche

1. Vordere Stoßfängerstruktur (20), die zwei gleiche vordere Stangen (21) aufweist, wobei jede Stange (21) einen zentralen Abschnitt (21a) umgeben von zwei Zwischenabschnitten (21b) und von zwei Endabschnitten (21c) aufweist, wobei die Stangen (21) zum Teil parallel und dazu bestimmt sind, über ihre Endabschnitte (21c) mit den vorderen Vorderenden von zwei Längsträgern eines Kraftfahrzeugs verbunden zu werden, **dadurch gekennzeichnet, dass** die zwei Stangen (21) in ihren Zwischenabschnitten (21b) in der Nähe ihrer Endabschnitte (21c) gebogen sind, damit sie in Höhe der Endabschnitte (21c) aneinander befestigt werden können, und gleichzeitig zwischen sich einen freien Mittelraum (25) aussparen.

2. Struktur nach Anspruch 1, **gekennzeichnet durch**, auf jeder Stange (21), mindestens einer mindestens linearen Kontaktzone mit der anderen Stange (21).

3. Struktur nach einem der Ansprüche 1 oder 2, **dadurch gekennzeichnet, dass** die Mittelachsen der Endabschnitte (21c) und des Mittelabschnitts (21a) sich in parallelen Ebenen befinden, aber einen Winkel zueinander bilden.

4. Struktur nach einem der Ansprüche 1 bis 3, **dadurch gekennzeichnet, dass** die Endabschnitte (21c) einen Flügel (22) zur Befestigung am vorderen Ende eines Längsträgers aufweisen.

5. Struktur nach Anspruch 4, **dadurch gekennzeichnet, dass** der Flügel (22) zur Befestigung am vorderen Ende eines Längsträgers eine Befestigungslasche (22b) aufweist, die mit dem Endabschnitt durch ein Winkelnachstellungsdreieck (22a) verbunden ist.

6. Struktur nach einem der Ansprüche 1 bis 5, **dadurch gekennzeichnet, dass** die Stangen (21) Profilteile mit rechteckigem oder quadratischem Querschnitt sind, wobei die Endabschnitte (21c) der zwei Stangen entlang einer Seite des Profils in der Zone des Endabschnitts (21c) in Kontakt sind.

7. Struktur nach einem der Ansprüche 1 bis 6, **dadurch gekennzeichnet, dass** die Stangen (21) Profilteile aus extrudiertem Metall sind.

8. Struktur nach Anspruch 7, **dadurch gekennzeichnet, dass** die Stangen (21) Profilteile aus extrudiertem Aluminium sind.
